# EUROPEAN PATENT SPECIFICATION

(11) **EP 1 059 345 B1**
(45) Date of publication and mention of the grant of the patent: **19.03.2003**
(21) Application number: 00111842.1
(22) Date of filing: 07.06.2000
(51) Int. Cl.: C09J 7/02

(54) **Pressure-sensitive adhesive sheet which is peelable and having a display function**
Bedruckte und reversibel haftende Haftklebefolie
Feuille auto-adhésiv pelable et avec une function d'affichage

(30) Priority: 09.06.1999 JP 16221599
(43) Date of publication of application: 13.12.2000
(73) Proprietor: LINTEC Corporation, Tokyo (JP)
(72) Inventor: Ashizawa, Kiyohisa, Urawa-shi, Saitama (JP)
(74) Representative: Gille Hrabal Struck Neidlein Prop Roos

(56) References cited:
- EP-A- 0 273 997
- EP-A- 0 826 754
- EP-A- 0 911 376
- DATABASE WPI Section Ch, Week 198947 Derwent Publications Ltd., London, GB; Class A14, AN 1989-344260 XP002145617 & JP 01 256582 A (MINNESOTA MINING & MFG CO), 13 October 1989 (1989-10-13)
- DATABASE WPI Section Ch, Week 199042 Derwent Publications Ltd., London, GB; Class A18, AN 1990-316746 XP002145618 & JP 02 225578 A (NITTO DENKO CORP), 7 September 1990 (1990-09-07)

## Description

### BACKGROUND OF THE INVENTION

The present invention relates to a pressure-sensitive adhesive sheet having a peeling display function on which the fact of peeling can be found easily and which can prevent to conceal the fact of peeling,when the pressure-sensitive adhesive sheet is peeled after the pressure-sensitive adhesive sheet is adhered on an adherend such as a packaging article in which contents are packed.

In recent years, pressure-sensitive adhesive sheets, in which transparent ink having poor adhesion was printed in pattern such as character on a satin finished surface of a substrate composed of a transparent plastic film surface-treated with satin finish, and comparative soft pressure-sensitive adhesive having strong adhesion was applied on all surface of the ink pattern and the substrate, have been known as the pressure-sensitive adhesive sheet having a peeling display function.

When the prior pressure-sensitive adhesive sheet is adhered on a sealing portion of the packaging article, in which contents are packed, to seal the sealing portion, in peeling of the pressure-sensitive adhesive sheet for opening the sealed portion, the transparent ink layer is peeled from the satin finished surface of the transparent plastic film, and the transparent ink layer and the pressure-sensitive adhesive layer of the surface layer formed thereon it are left on the surface of the packaging article as they are adhered. And then, even if the transparent ink layer is adhered again to the satin finished surface of the transparent plastic film, the transparent ink layer can not be completely reconstructed on the original irregularity of the satin finished surface and voids occur in the irregularity of the satin finished surface. Therefore, the fact of unsealing can be easily found.

However, in the prior pressure-sensitive adhesive sheet, when the pressure-sensitive adhesive sheet is peeled from the adherend such as the packaging article, a part of the transparent ink layer and the pressure-sensitive adhesive layer formed on the surface of the transparent ink layer are not left on the surface of the adherend because of the adhesion to the satin finished surface and the like, and the transparent ink layer may be not peeled from the satin finished surface of the transparent plastic film. Therefore, there is a case that the peeling display function can not be demonstrated.

An object of the present invention is to provide a pressure-sensitive adhesive sheet in which the transparent ink layer and the pressure-sensitive adhesive layer of the surface layer formed on it can be easily peeled from the transparent plastic film of the substrate in peeling of the pressure-sensitive adhesive sheet having a peeling display function from the adherend and the peeling display function can be sufficiently demonstrated.

Extensive investigations undertaken by the present inventor directed to the object described above have led to the discovery that the peeling display function can be demonstrated without satin finish treatment of the substrate surface by giving the specific viscoelasticity characteristic to the pressure-sensitive adhesive layer in the pressure-sensitive adhesive sheet.

The present invention thus provides a pressure-sensitive adhesive sheet having a peeling display function which comprises a transparent plastic film, a transparent ink layer formed on a surface of the transparent plastic s film, and a pressure-sensitive adhesive layer formed on a surface of the transparent ink layer and the transparent plastic s film, wherein the pressure-sensitive adhesive layer have a loss tangent (tanδ ) of 0.1 to 0.9 at 100 °C.

In another aspect, the present invention provides a pressure-sensitive adhesive sheet having a peeling display function, as described above, wherein a temperature at maximum value of the loss tangent (tanδ ) of the pressure-sensitive adhesive layer under 1 Hz is 10 °C or low.

In still another aspect, the present invention provides a pressure-sensitive adhesive sheet having a peeling display function, as described above, wherein the pressure-sensitive adhesive layer contains a colorant.

Figure 1 shows a sectional view of a part of one embodiment of the pressure-sensitive adhesive sheet of the present invention.

Figure 2 shows a sectional view of a part of one embodiment of the pressure-sensitive adhesive sheet of the present invention in the state that the pressure-sensitive adhesive sheet is peeled from an adherend after the pressure-sensitive adhesive sheet was adhered on the surface of the adherend.

The transparent plastic film of the substrate used in the pressure-sensitive adhesive sheet of the present invention includes, for examples, transparent films of various synthetic resins, including polyolefin resins, such as, polyethylene resins, polypropylene resins and ethylene-vinyl acetate copolymers; polyester resins, such as, polyethylene terephthalate resins and polybutylene terephthalate resins; polyvinyl chloride resins; polyvinyl alcohol resins; polycarbonate resins; polyamide resins; polyimide resins; fluororesins and copolymer resins containing at least any one of the forgoing resins; polymer blends thereof and polymer alloys thereof. Among these films, polyethylene terephthalate resin films or sheets and polypropylene films or sheets are preferred, because of high strength and cheapness. The transparent plastic film can comprise only single layer or multilayers having two or more layers of same or different layers.

A thickness of the transparent plastic film is not limited, and usually is in a range of from 12 to 250 micrometers, preferably in a range of from 25 to 75 micrometers.

The surface of the transparent plastic film on which the transparent ink layer is formed can be smooth or satin finish.

The transparent ink layer is not limited so long as the ink layer can adhere to the surface of the transparent plastic film and be peeled from the surface. The transparent ink used in the transparent ink layer includes, for example, polyester resins, modified nylon resins, chlorinated ethylene vinyl alcohols, chlorinated polypropylenes, chlorinated polyethylenes, polyethylene vinyl alcohol resins, polyvinyl alcohol, vinyl acetate resins, acrylic resins, cellulose resins, epoxy resins, urethane resins, vinyl chloride resins and vinyl chloride-vinyl acetate copolymer.

The transparent ink can contain ingredients such as inorganic pigments such as silica, defoaming agent and leveling agent.

A thickness of the transparent ink layer is not limited, and usually is in a range of from 0.01 to 1 micrometers, preferably in a range of from 0.05 to 0.5 micrometers.

The transparent ink layer is formed in pattern. The pattern can be forms that can be recognized as the pattern by observation from the surface side of the transparent plastic film, and includes, for example, single or a combination of two or more members such as a character, a symbol and a line. The pattern is preferably the pattern demonstrating the meaning of opened state. The pattern demonstrating the meaning of opened state is preferably characters such as "OPENED" and "VOID".

The transparent ink layer can be formed by any one of methods such as application and printing of the transparent ink.

In the pressure-sensitive adhesive sheet of the present invention, the pressure-sensitive adhesive layer is formed on the surfaces of the transparent ink layer and the transparent plastic film, wherein the transparent ink layer is not formed.

The pressure-sensitive adhesive layer in the pressure-sensitive adhesive sheet of the present invention has a loss tangent (tanδ ) of 0.1 to 0.9, preferably 0.2 to 0.7. The loss tangent (tanδ) is a ratio of loss modulus to storage modulus under 1 Hz at 100 °C.

When the loss tangent (tanδ ) at 100 °C is less than 0.1, cohesion of the pressure-sensitive adhesive layer is large, but the pressure-sensitive adhesive layer is inferior in wetting to the adherend and in adhesiveness to the adherend. Therefore, when the pressure-sensitive adhesive sheet having a peeling display function, which has the pressure-sensitive adhesive layer having loss tangent (tanδ ) of less than 0.1, is peeled again after the pressure-sensitive adhesive sheet is adhered to the adherend, the pressure-sensitive adhesive layer formed on the transparent ink layer is peeled from the adherend and the peeling display function may be not manifested.

On the other hand, when the loss tangent (tanδ ) is more than 0.9 at 100 °C, cohesion of the pressure-sensitive adhesive layer is small. And when the pressure-sensitive adhesive layer is peeled, cohesive failure is caused in an internal portion of the pressure-sensitive adhesive layer, the pressure-sensitive adhesive is left on the both sides of the transparent plastic film and the adherend, and the peeling display function may be not manifested.

Further, the temperature at maximum value of the loss tangent (tanδ ) of the pressure-sensitive adhesive layer under 1 Hz in the pressure-sensitive adhesive sheet of the present invention is preferably 10 °C or low. When the temperature at maximum value of the loss tangent (tanδ ) under 1 Hz is more than 10 °C, the pressure-sensitive adhesive layer loses tack and adhesion to the adherend is decreased.

The loss tangent (tanδ ) and the temperature at maximum value of the loss tangent (tanδ ) of the pressure-sensitive adhesive layer described above are determined by the selection and the content amount of adhesives such as pressure-sensitive adhesives, colorants, fillers and tackifiers described below.

The pressure-sensitive adhesives used in the pressure-sensitive adhesive layer include, for example, natural rubber pressure-sensitive adhesive, synthetic rubber pressure-sensitive adhesive, acrylic resin pressure-sensitive adhesive, polyvinyl ether resin pressure-sensitive adhesive, urethane resin pressure-sensitive adhesive, silicone resin pressure-sensitive adhesive and the like. Examples of the synthetic rubber pressure-sensitive adhesive are styrene-butadiene rubbers, polyisobutylene rubbers, isobutylene-isoprene rubbers, isoprene rubbers, styrene-isoprene block copolymers, styrene-butadiene block copolymer, styrene-ethylene-butylene block copolymers, ethylene-vinyl acetate thermoplastic elastomers and the like. Examples of the acrylic resin pressure-sensitive adhesive are homopolymers or copolymers of acrylic acid, methyl acrylate, ethyl acrylate, propyl acrylate, butyl acrylate, 2-ethylhexyl acrylate, ethyl methacrylate, butyl methacrylate, acrylonitrile and the like. Examples of the polyvinyl ether resin pressure-sensitive adhesive are polyvinyl ether, polyvinyl isobutyl ether and the like. Examples of the silicone resin pressure-sensitive adhesive are dimethyl polysiloxane and the like. The pressure-sensitive adhesives can be used by single member or a combination of two or more members.

The pressure-sensitive adhesive layer can contain a colorant. The colorant includes either of dyes or pigments, or the mixtures thereof. Examples of the proper dyes include, for example, non-water soluble dyes such as sulfur dyes including Sulfur Black T, vat dyes including indanthrone, spirit soluble dyes including Spirit Blue, oil soluble dyes including Sudan 11, disperse dyes including Ceriton Fast Violet B, and azo dyes including Naphthol AS, Amaranse and the like, and water soluble dyes such as basic dyes including Methylen Blue, acid dyes including Orange II, direct dyes including Congo Red , solubilized vat dyes including Anthrazoke O, acid mordant dyes including Eriochrome Black T, mordant dyes including Alizarin Red S and the like.

Examples of the pigments include organic pigments of phthalocyanine pigments including, for example, Copper Phthalocyanine Blue, Copper Phthalocyanine Green, Brominated Copper Phthalocyanine Green and the like; azo pigments such as monoazolake pigments including, for example, Lake Red C, Permanent Red 2B, Brilliant Carmine 6B and the like, monoazo pigments including, for example, Toluidine Red, Naphthol Carmine FB, Fast Yellow G, Dinitroaniline Orange, Naphthol Violet B, Benzimidazolone Brown and the like, disazo pigment including, for example, Disazo Yellow AAA, Disazo Yellow HR, Pyrazolone Red B and the like, condensed azo pigments including, for example, Condensed Azo Yellow HR, Condensed Azo Red BR, Condensed Azo Brown 5R and the like, metalcomplex azo pigments including, for example, Nickel Azo Yellow and the like; condensed polyring pigments such as anthraquinone pigments including, for example, Flavonslone Yellow, Dianthraquinolyl Red; Indanthrone Blue and the like , thioindigo pigments including, for example, Thioindigo Bordeaux and the like, perynone pigments including, for example, Perynone Orange and the like, Perylene pigments including, for example, Perylene Scarlet, Perylene Red 178, Perylene Maroon and the like, quinacridone pigments including, for example, Quinacridone Red , Quinacridone Magenta, Quinacridone Scarlet and the like, dioxadine pigments including, for example, Dioxadine Violet and the like, isoindolynone pigments including, for example, Isoindolynone Yellow 2GLT, Isoindolynone Yellow and the like, quinophthalone pigments including, for example, Quinophthalone Yellow and the like, and isoindolyne pigments including, for example, Isoindolyne Yellow and the like; nitroso pigments including, for example, Nickel Nitroso Yellow and the like; alizarin lake pigments including, for example, Madder Lake and the like; metalcomplex azomethine pigments including, for example, Copper Azomethine Yellow and the like; aniline black pigments; alkali blue pigments; and the like; and inorganic pigments such as chrome yellow, chrome vermilion, red iron oxide, black iron oxide, titanium oxide, titanium yellow, cerulean blue, yellow iron oxide, cadmium yellow, cadmium red, lithopone, molybdate orange, zinc chromate, ultramarine blue, manganese violet, cobalt violet, emerald green, iron blue, cobalt blue, cobalt green, chrome oxide, pyridian and carbon black and the like.

The content amount of the colorant can be controlled to be desirable color.

The pressure-sensitive adhesive layer can contain a filler such as silica, talc, clay and calcium carbonate.

Also, the pressure-sensitive adhesive layer can contain tackifier, softener and antioxidant according to needs. The tackifier includes rosin resins, terpene phenol resins, terpene resins, aromatic hydrocarbon modified terpene resins, petroleum resin, coumarone-indene resins, styrene resins, phenol resins and xylene resins. The softener includes process oil, liquid rubbers and plasticizers.

The adhesion strength of the pressure-sensitive adhesive layer to the transparent plastic film is preferably larger than the adhesion strength of the pressure-sensitive adhesive layer to the adherend. Further, the adhesion strength of the transparent ink layer to the transparent plastic film is preferably smaller than the adhesion strength of the pressure-sensitive adhesive layer to the transparent ink and the adherend.

The thickness of the pressure-sensitive adhesive layer is not limited, but the thickness of the pressure-sensitive adhesive layer formed on the surface of the transparent ink layer is usually in the range from 10 to 200 µm, preferably from 15 to 40 µm.

The surface of the pressure-sensitive adhesive layer can be covered with a release liner. Also, without using the release liner, release property can be obtained by application of release agent and the like on the surface of the transparent plastic film, on which the PSA is not formed, and the pressure-sensitive adhesive sheet can be preserved in roll. Thus, stain on the surface of pressure-sensitive adhesive layer can be prevented by protection of the surface described above.

As the release liner, various release liners obtained by applying release treatment on contact surface of the substrate such as, for example, films or sheets of various resins including polyethylene terephthalate, polybutylene terephthalate, polyethylene, polypropylene, polyarylate and the like, various papers including polyethylene laminated paper, polypropylene laminated paper, clay coated paper, resin coated paper, glassine paper and the like, to the pressure-sensitive adhesive layer according to needs, can be used.

In this case, representative examples of release treatment are application and formation of release agent layer comprising release agent such as silicone resins, long-chain alkyl resins, fluororesins and the like.

The thickness of the release liner is not limited and can be selected properly.

The pressure-sensitive adhesive layer can be formed by any one of various methods. The methods are not limited particularly and include, for example, air knife coater, blade coater, bar coater, gravure coater, roll coater, curtain coater, die coater, knife coater, screen coater, rod coater, kiss coater and the like.

When the pressure-sensitive adhesive sheet having a peeling display function of the present invention is at first adhered on the adherend, the transparent ink layer of the pattern can be not observed by visual from the above of the transparent plastic film. Therefore, it is understood that there is not a fact that the pressure-sensitive adhesive sheet was peeled. When the pressure-sensitive adhesive sheet of the present invention is peeled from the adherend, the transparent ink layer is peeled from the transparent plastic film. And the transparent ink layer and the pressure-sensitive adhesive layer existed on the surface of the transparent ink layer are torn from the surrounding pressure-sensitive adhesive layer and not left on the surface of the adherend in adhered state to the adherend. The other portion of the pressure-sensitive adhesive layer is peeled from the adherend and is left on the transparent plastic film. In the present invention, the pressure-sensitive adhesive layer has specific viscoelasticity. Therefore, when the transparent ink layer and the pressure-sensitive adhesive layer existed on the surface of the transparent ink layer are torn form the surrounding pressure-sensitive adhesive layer, the pressure-sensitive adhesive layer existed on the surface of the transparent ink layer are deformed. Accordingly, even if the peeled pressure-sensitive adhesive layer is adhered again in the original position, the layer can be not adhered completely in the original position and voids occur between the surfaces of the transparent ink layer and the transparent plastic film. At the result, the pattern of the transparent ink layer can be observed by visual from above of the transparent plastic film and it is possible to understand that there is a fact that the pressure-sensitive adhesive sheet was peeled.

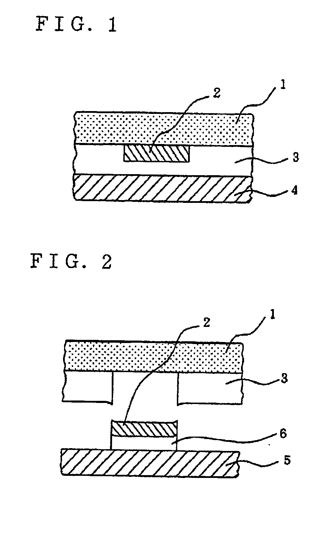

The function is explained based on the figures. Figure 1 shows a sectional view of a part of the pressure-sensitive adhesive sheet in one embodiment of the present invention. The transparent ink layer 2 is formed in pattern by applying or printing on a part of the surface of the transparent plastic film 1. The transparent or colored pressure-sensitive adhesive layer 3 is formed on the surface the transparent ink layer 2 and the surface of the transparent plastic film wherein the transparent ink layer 2 is formed. Further, the release liner 4 is covered on the surface of the pressure-sensitive adhesive layer 3. When the pressure-sensitive adhesive sheet with the release liner 4 is used to the adherend such as package, the release liner 4 is removed and the pressure-sensitive adhesive sheet is adhered.

Figure 2 shows a sectional view of a part of the state that the pressure-sensitive adhesive sheet of one embodiment of the present invention is peeled after the sheet is adhered on the surface of the adherend 5. Since the pressure-sensitive adhesive layer 3 is adhered sufficiently to the transparent plastic film 1 and the characteristic of loss tangent (tan δ ) of the pressure-sensitive adhesive layer 3 is in the prescribed range, the pressure-sensitive adhesive layer 3 is peeled from the adherend without leaving on the adherend 5 in peeling the pressure-sensitive adhesive sheet from the adherend 5. On the other hand, since the transparent ink layer 2 is poor in adhesiveness to the surface of the transparent plastic film 1 and the characteristic of loss tangent (tan δ ) of the pressure-sensitive adhesive layer 3 is in the prescribed range, the transparent ink layer 2 is peeled from the transparent plastic film 1 as the transparent ink layer 2 is adhered to the adherend 5, without peeling from the surface of the adherend 5. When the pressure-sensitive adhesive layer 6, which is existed on the surface of the transparent ink layer 2 peeled from the transparent plastic film 1, is torn from the surrounding pressure-sensitive adhesive layer 3, deformations such as upheaval of the surrounding portion are caused and the transparent ink layer 2 is also deformed according to the deformations. Further, the breaking portion of the surrounding pressure-sensitive adhesive layer 3 is deformed.

Even if the pressure-sensitive adhesive sheet of the embodiment is adhered again to the adherend 5, the deformed transparent ink layer 2 is adhered in different position from the original position of the transparent plastic film 1. Therefore, voids occur between the surfaces of the transparent ink layer 2 and the transparent plastic film 1. Also, even if the deformed transparent ink layer 2 is adhered sufficiently in the original position of the transparent plastic film 1, voids occur between the surfaces of the transparent ink layer 2 and the transparent plastic film 1. Since transmitted light from the pressure-sensitive adhesive sheet is reflected irregularly by the voids, the portion of the transparent ink layer 2 in pattern becomes opaque. Accordingly, the opaque portion can be observed by visual and the fact of peeling can be understood.

By the pressure-sensitive adhesive sheet having a peeling display function of the present invention the fact of peeling can be observed by visual if the sheet is peeled, and the sheet can be used to various adherends such as package. Particularly, when the sheet is adhered to the sealing portion of the package, the sheet can demonstrate the opened fact.

### EXAMPLES

The present invention is described more specifically by reference to embodiments thereof. It should be noted that the present invention is not intended to be limited by these embodiments.
(1) Measuring method of loss tangent:
(2) A value of the loss tangent (tanδ ) was obtained by the measuring result of temperature dependency with a torsional shear method under 1 Hz of measuring frequency, using Dynamic Spectrometer RDS(II)(produced by Rehometerics Inc.).

### Example 1

On one surface of a transparent plastic film composed of a transparent polyester resin film having a thickness of 50 µ m, transparent ink comprising methyl cellulose resin was printed in character of "OPENED" by a gravure printing machine to form a transparent ink layer having a thickness of 0.1µm. Next, pressure-sensitive adhesive comprising acrylic adhesive as resin component and titanium dioxide as colorant in the content of 20 percent by weight was applied by a knife coater to form a pressure-sensitive adhesive layer having a loss tangent (tan δ ) of 0.57 under 1Hz at 100 °C, a temperature of -15 °Cat maximum value of the loss tangent (tanδ) under 1 H and a thickness of 20 µm was formed on the surface of the transparent ink layer and the surface of the transparent plastic film wherein the transparent ink layer was formed. And then, a release liner was covered on the pressure-sensitive adhesive layer to prepare a pressure-sensitive adhesive sheet. The pressure-sensitive adhesive sheet was adhered to a sealing portion of the package. And then, the pressure-sensitive adhesive sheet was peeled from the package and adhered again to the package. At the result, a opaque character of "OPENED" was observed by visual.

### Example 2

On one surface of a transparent plastic film composed of a transparent polypropylene resin film having a thickness of 70 µm, transparent ink comprising methyl methacrylate resin was printed in character of "OPENED" by a gravure printing machine to form a transparent ink layer having a thickness of 0.1µm. Next, pressure-sensitive adhesive comprising acrylic adhesive as resin component and carbon black as colorant in the content of 10 percent by weight was applied by a knife coater to form a pressure-sensitive adhesive layer having a loss tangent (tan δ ) of 0.72 under 1Hz at 100 °C, a temperature of -17°C at maximum value of the loss tangent (tanδ ) under 1 H and a thickness of 20 µm was formed on the surface of the transparent ink layer and the surface of the transparent plastic film wherein the transparent ink layer was formed. And then, a release liner was covered on the pressure-sensitive adhesive layer to prepare a pressure-sensitive adhesive sheet. The pressure-sensitive adhesive sheet was adhered to a sealing portion of the package. And then, the pressure-sensitive adhesive sheet was peeled from the package and adhered again to the package. At the result, a opaque character of "OPENED" was observed by visual.

## Claims

1. A pressure-sensitive adhesive sheet (1,2,3) having a peeling display function which comprises a transparent plastic film (1), a transparent ink layer (2) formed on a part of a surface of the transparent plastic film, and a pressure-sensitive adhesive layer (3) formed on a surface of the transparent ink layer and on the surface of the transparent plastic film, wherein the pressure-sensitive adhesive layer have a loss tangent (tan δ ) of 0.1 to 0.9 under 1 Hz at 100 °C.

2. The pressure-sensitive adhesive sheet as claimed in claim 1, wherein a temperature at maximum value of the loss tangent (tan δ ) of the pressure-sensitive adhesive layer under 1 Hz is 10 °C or low.

3. The pressure-sensitive adhesive sheet as claimed in claim 1 or 2, wherein the pressure-sensitive adhesive layer contains a colorant.

## Patentansprüche

1. Eine druckempfindliche Haftklebefolie (1,2,3) mit einer Abziehanzeigefunktion, welche einen transparenten Kunststofffilm (1), eine transparente Tintenschicht (2), die auf einem Teil einer Oberfläche des transparenten Kunststofffilms aufgetragen ist, und eine druckempfindliche Haftklebeschicht (3) umfasst, welche auf der Oberfläche einer transparenten Tintenschicht und auf der Oberfläche des transparenten Kunststofffilms aufgetragen ist, wobei die druckempfindliche Haftklebeschicht einen Verlusttangens (tan δ) von 0.1 bis 0.9 unter 1 Hz bei 100°C hat.

2. Die druckempfindliche Haftklebefolie nach Anspruch 1, **dadurch gekennzeichnet, dass** eine Temperatur beim Maximalwert des Verlusttangens (tan δ) der druckempfindlichen Haftklebeschicht unter 1 Hz 10° C oder weniger beträgt.

3. Die druckempfindliche Haftklebefolie nach den Ansprüchen 1 oder 2, **dadurch gekennzeichnet, dass** die druckempfindliche Haftklebeschicht einen Farbstoff enthält.

## Revendications

1. Feuille auto-adhésive (1, 2, 3) ayant une fonction de mise en évidence d'un décollement, qui comprend un film plastique transparent (1), une couche d'encre transparente (2) formée sur une partie d'une surface du film plastique transparent, et une couche auto-adhésive (3) formée sur une surface de la couche d'encre transparente et sur la surface du film de plastique transparent, dans laquelle la couche auto-adhésive a une tangente d' angle de perte (tan δ) de 0,1 à 0,9 sous 1 Hz à 100°C.

2. Feuille auto-adhésive selon la revendication 1, dans laquelle la couche auto-adhésive possède une température correspondant à la valeur maximum de la tangente de l'angle de pertes (tan δ) sous 1 Hz de 10°C ou moins.

3. Feuille auto-adhésive selon la revendication 1 ou 2, dans laquelle la couche auto-adhésive contient un colorant.
